Europäisches Patentamt

European Patent Office

Office européen des brevets

(19)

(11) Veröffentlichungsnummer: **0 097 144**
**B1**

(12) **EUROPÄISCHE PATENTSCHRIFT**

(45) Veröffentlichungstag der Patentschrift:
**15.10.86**

(21) Anmeldenummer: **83890098.3**

(22) Anmeldetag: **13.06.83**

(51) Int. Cl.⁴: **C 22 B 1/08**, C 22 B 1/10

(54) **Verfahren zur Abtrennung von Nichteisenmetallen aus eisenoxidhältigen Rückständen.**

(30) Priorität: **18.06.82 AT 2367/82**

(43) Veröffentlichungstag der Anmeldung:
**28.12.83 Patentblatt 83/52**

(45) Bekanntmachung des Hinweises auf die Patenterteilung:
**15.10.86 Patentblatt 86/42**

(84) Benannte Vertragsstaaten:
**BE DE FR GB IT LU NL SE**

(56) Entgegenhaltungen:
**DE-B-1 180 946**
**FR-A-711 826**
**FR-A-1 129 885**
**FR-A-1 187 508**
**FR-A-1 242 939**
**FR-A-1 570 317**

**Winnacker,Küchler: Chemische Technologie, Band 6, 1973, Seiten 15, 16**
**Ullmann Enzyklopädie, Band 21, Seiten 40, 41**
**Lehrbuch chemischer Technologie, Band 1, Seiten 278, 279**
**Ost, Rassow: World Steel and Metalworking, Vol 5,1983, pages 26-34**

(73) Patentinhaber: **VOEST- ALPINE Aktiengesellschaft, Muldenstrasse 5, A-4020 Linz (AT)**

(72) Erfinder: **Mitter, Gerhard, Dipl.- Ing., Nelkengasse 15, A-4050 Traun (AT)**
Erfinder: **Kandler, Wilhelm, Dr., Dopschweg 4, A-4040 Linz (AT)**
Erfinder: **Hoheneder, Adolf, A-4064 Oftering 57 (AT)**

(74) Vertreter: **Wolfram, Gustav, Dipl.- Ing., Schwindgasse 7 P.O. Box 205, A-1041 Wien (AT)**

## Beschreibung

Die Erfindung betrifft ein Verfahren zur Abtrennung von Nichteisenmetallen aus eisenoxidhältigen Rückständen durch Chlorierung der Rückstände mittels elementaren Chlors bei erhöhter Temperatur und Abkühlung der Reaktionsgase unter Sublimation der gebildeten sublimierbaren Chloride.

Verfahren dieser Art sind bereits bekannt und beispielsweise in der FR-A 1 242 939 und in der DE-C 1 180 946 beschrieben. Danach werden oxidische Materialien, wie hüttenmännische Zwischen- und Abfallprodukte in stückiger Form, u.zw. in Form von Pellets, Briketts u.dgl., in einem Schachtofen mit Chlor in relativ geringer Konzentration, nämlich 1 bis 30 Vol% (FR-A 1 242 939) enthaltenden Gasen umgesetzt, wobei eine Temperatur über 800° C, gemäß der FR-A 1 242 939 vorzugsweise eine Temperatur zwischen 900 und 1100° C, angewendet wird. Das Reaktionsgas, welches gemäß der DE-C 1 180 946 am Kopf des Schachtofens abgezogen wird, besteht aus den von der Heizzone des Schachtofens stammenden CO-, $CO_2$- und $H_2O$-hältigen Gasen, aus den bei der Chlorierung anfallenden Gasen und den Metallchloriden. Das Chlorierungsgas wird in den unteren Teil des Schachtofens eingeführt und nach oben geleitet. Die eingesetzte Chlormenge entspricht etwa dem stöchiometrischen Verhältnis oder einem lediglich geringen Überschuß, bezogen auf die sublimierbaren Nichteisenmetalle.

Dieses Verfahren ist insofern nachteilig, als bei der angewendeten hohen Temperatur neben den zu entfernenden Nichteisenmetallen auch eine erhebliche Menge an Eisen chloriert wird und die gebildeten flüchtigen Chloride gemeinsam während der Abkühlung des Reaktionsgases niedergeschlagen werden. Eine saubere Abtrennung der Nichteisenmetalle ist nicht erzielbar. Außerdem werden bei der hohen Temperatur die Anlagenwerkstoffe bzw. Rohrleitungen nicht unerheblich angegriffen. Bei der bekannten Technik muß auch ein zu großer Chlorüberschuß über das stöchiometrische Verhältnis hinaus vermieden werden, weil die Wiedergewinnung des Chlorüberschusses technisch-wirtschaftlich nicht möglich ist.

Die Erfindung bezweckt die Vermeidung der aufgezeigten Nachteile und Schwierigkeiten und stellt sich die Aufgabe, unter Vermeidung von Chlorverlusten eine exakte Trennung der sublimierbare Chloride bildenden Nichteisenmetalle von den eisenoxidhältigen Rückständen zu gewährleisten, wobei die Reaktionsgeschwindigkeit gegenüber der bekannten Arbeitsweise erhöht ist und die Anlagenteile geschont werden. Weiters soll das erfindungsgemäße Verfahren in einfacher Weise auch die Möglichkeit schaffen, chlorierbare, jedoch nicht sublimierbare Nichteisenmetalle, wie Magnesium und Calcium, von den eisenoxidhältigen Rückständen abzutrennen.

Diese Aufgabe wird bei einem Verfahren der eingangs definierten Art erfindungsgemäß durch die Kombination folgender Maßnahmen gelöst:

a) daß als Ausgangsmaterial Konverterstaub aus den Abgasen der Stahlerzeugung oder Hochofenfeingichtstaub eingesetzt wird;

b) daß als Reaktionsgas technisch reines Chlorgas in einem Überschuß von mindestens 2:1 gegenüber der stöchiometrisch zur Chlorierung der abzutrennenden Nichteisenmetalle notwendigen Menge, gegebenenfalls in Mischung mit Inertgas, verwendet wird und

c) daß die Reaktionstemperatur bei der Chlorierung zwischen 600 und 800° C gehalten wird, wobei zur Abtrennung von Nichteisenmetallen, welche keine sublimierbaren Chloride bilden, wie Calcium und Magnesium,

entweder das Ausgangsmaterial durch Behandeln mit Säure aufbereitet wird, die erhaltene Lösung abgetrennt und der Rückstand getrocknet wird, bevor er der Chlorierung zugeführt wird,

oder die nach der Chlorierung und Abtrennung des Sublimates anfallenden Ausgangsmaterialrückstände in Wasser aufgeschlämmt werden und die Aufschlämmung filtriert wird.

Die erste Maßnahme, nämlich feinteilige Ausgangsmaterialien einzusetzen, wobei Korngrößen von weniger als 100 µm bevorzugt sind, jedoch auch solche bis etwa 3 mm Korngröße verarbeitet werden können, ist einer der Gründe für die hohe Reaktionsgeschwindigkeit, weil Einsatzstoffe mit dieser Partikelgröße eine große Oberfläche aufweisen. Sie eignen sich auch in besonderer Weise dazu, im Wirbelbett- bzw. Fließbettverfahren aufgearbeitet zu werden, weil sie mit den üblichen Strömungsgeschwindigkeiten des Reaktionsgases in Schwebe gehalten werden können. Solche staubförmigen Rückstände aus der Eisenmetallurgie stellten bisher einen großen Materialverlust dar, da sie nicht unmittelbar in den Stahlerzeugungsprozeß rückführbar waren und ihre Aufbereitung, d.h. die Abtrennung von Nichteisenmetallen, bisher nicht mit ausreichender Wirtschaftlichkeit durchgeführt werden konnte.

Die zweite Maßnahme, nämlich die Verwendung eines mehr als doppelten stöchiometrischen Überschusses an Chlorgas, bezogen auf die zu entfernenden Nichteisenmetalle, bewirkt ebenfalls eine Reaktionsbeschleunigung, wobei das Chlorgas, welches auch ein in bezug auf die Reaktion inertes Gas, wie Stickstoff oder ein Edelgas, enthalten kann, als Trägergas in der Chlorierungsphase und auch in der Sublimationsphase dient. Nach Abscheidung der sublimierbaren Produkte wird das nicht verbrauchte Chlorgas zum Chlorierungsreaktor rück- und im weiteren Verlauf des Prozesses bei kontinuierlicher Arbeitsweise im Kreislauf geführt.

In der FR-A 15 70 317 ist ein Verfahren zum Rösten und Reinigen von Eisensulfiderzen beschrieben, bei dem das feste, sulfidische Material zunächst geröstet und sodann bei einer Temperatur zwischen 600 und 1000° C - unter anderem mit einem Chlor oder Chlorverbindungen enthaltenden Gas - weiter behandelt wird. Nach den konkreten Beispielen in der FR-PS wird allerdings ausschließlich HCl in lediglich geringem stöchiometrischem Überschuß enthaltendes Gas, u.a. sogar Luft mit 20 % HCl, als Chlorierungsmittel eingesetzt. Eine Sublimation sublimierbarer Chloride erfolgt nicht, zur Kühlung des Gasstromes aus dem Chlorierungsreaktor kann Wasser direkt in den Gasstrom eingespritzt werden.

Ausgangsprodukte sind nach der FR-A 15 70 317 also sulfidische Erze bzw. Kiesabbrände, nicht aber die ganz bestimmten feinteiligen Einsatzstoffe, welche nach dem erfindungsgemäßen Verfahren verwertet werden können. Bei der erfindungsgemäßen Umsetzung der Nichteisenmetallverbindungen mit Chlor gasförmige Reaktionsprodukte, wie Sauerstoff, gebildet werden, ist es vorteilhaft, diese aus dem Reaktionsgas zu entfernen und das Chlor, sowie gegebenenfalls Inertgas, in den Chlorierungsreaktor rückzuführen; das kann beispielsweise dadurch geschehen, daß das Reaktionsgas vor der Wiedereinführung in den Chlorierungsreaktor unter die kritische Temperatur von Chlor abgekühlt, das Chlorgas durch Druckanwendung verflüssigt und auf diese Weise von den unerwünschten gasförmigen Bestandteilen getrennt wird. Anschließend wird das gereinigte Chlor wieder dem Reaktor zugeführt.

Der als dritte Maßnahme des erfindungsgemäßen Verfahrens einzuhaltende Temperaturbereich liegt unterhalb der bisher bei einer Chlorierung mit gasförmigem Chlor angewendeten Temperatur, was den Vorteil hat, daß die Anlagenteile geschont werden und dennoch die Reaktionsgeschwindigkeit größer ist als bei den einleitend erwähnten bekannten Verfahren. Gleichzeitig sind damit Vorteile hinsichtlich des Energieaufwandes verbunden und als weiterer gravierender Vorteil ist anzuführen, daß sich bei dieser Temperatur Eisenchlorid nur in vernachlässigbar geringen Mengen bildet. Schließlich ist ein weiterer Vorteil der erfindungsgemäß eingestellten niedrigeren Temperatur darin zu sehen, daß in einem Bereich gearbeitet wird, in dem das geschmolzene $ZnCl_2$ hohen Dampfdruck aufweist, jedoch andererseits noch keine aufwendige Abkühlung vor der Sublimationskammer erforderlich ist. Zink ist jenes Element, das der Rückführung der eisenoxidhältigen Rückstände in den Eisen- bzw. Stahlerzeugungsprozeß am meisten im Wege steht, da es insbesondere auf verschiedene Ofenbauteile zerstörend wirkt. Sind Calcium- und Magnesiumverbindungen in dem zur Chlorierung eingesetzten Material enthalten, werden die aus diesen Elementen gebildeten Chloride bei entsprechender Temperaturführung nicht bis zum Schmelzpunkt erhitzt. Bei geschmolzenen Bestandteilen besteht die Gefahr, daß sie einen Überzug auf den Partikeln der Einsatzstoffe bilden, wodurch die Bildung von Agglomeraten gefördert wird. Das Innere solcher Agglomerate ist für das Reaktionsgas nur schwer zugänglich; der Reaktionsablauf würde zumindest verzögert werden.

Bei höheren Erdalkalicarbonat-,-oxid- bzw. -hydroxidanteilen der feinteiligen Ausgangsmaterialien empfiehlt sich die Abtrennung derjenigen Nichteisenmetalle, welche keine sublimierbaren Chloride bilden, vor der Chlorierung. Zum Entfernen größerer Mengen an Erdalkalimetallen ist Herauslösen mit Säure vor der Chlorierung deswegen wirtschaftlicher, weil erhebliche Mengen an Chlorgas eingespart werden und weiters eine Freisetzung von Kohlendioxid bei der Chlorierung weitgehend vermieden wird.

Bei relativ niedrigen Gehalten der Einsatzstoffe an Erdalkalimetallen ist es hingegen günstiger, erst die anfallenden Rückstände mit Wasser zu laugen und auf diese Weise die darin verbliebenen Chloride herauszulösen.

Die Beheizung des Chlorierungsreaktos kann dadurch erfolgen, daß eine indirekte Außenheizung des Chlorierungsreaktors vorgesehen wird, oder dadurch, daß vor dem Einbringen der feinteiligen Einsatzstoffe und des Reaktionsgases die umzusetzenden Reaktionspartner auf Reaktionstemperatur erhitzt werden.

Wie bereits erwähnt, wird das überschüssige Reaktionsgas vorzugsweise im Kreislauf geführt, wobei jeweils unerwünschte gasförmige Reaktionsprodukte, wie Sauerstoff, teilweise oder zur Gänze aus dem Reaktionsgas entfernt werden.

Nach einer vorteilhaften Ausführungsform wird die Chlorierung der feinteiligen Einsatzstoffe in einem Fließbett bzw. in einer Wirbelschicht durchgeführt. Auf diese Weise wird die Abtrennung besonders schnell und gründlich bewerkstelligt.

Zweckmäßig wird als Reaktionsgas im Ausgangszustand ein Gemisch von Chlorgas und Stickstoff verwendet, wobei jedoch das Chlorgas nicht allzusehr verdünnt sein darf. Infolge der höheren Gesamtdurchsatzmenge an Reaktionsgas werden die flüchtigen Nichteisenmetallchloride schneller abgeführt. Stickstoff ist leicht und in großen Mengen verfügbar und nimmt im erfindungsgemäßen Bereich der Chlorierungstemperaturen an keinen Reaktionen teil.

In manchen Fällen ist es zur Erzielung einer noch besseren Trennschärfe unter Ausnützung der Druckabhängigkeit des Phasenüberganges der Chloride von Vorteil, daß die Chlorierung unter erhöhtem Druck durchgeführt wird. Darüber hinaus wird dadurch die Chloridbildungsgeschwindigkeit weiter erhöht.

Die Erfindung wird im folgenden anhand zweier Verfahrensschemata und Beispiele näher erläutert.

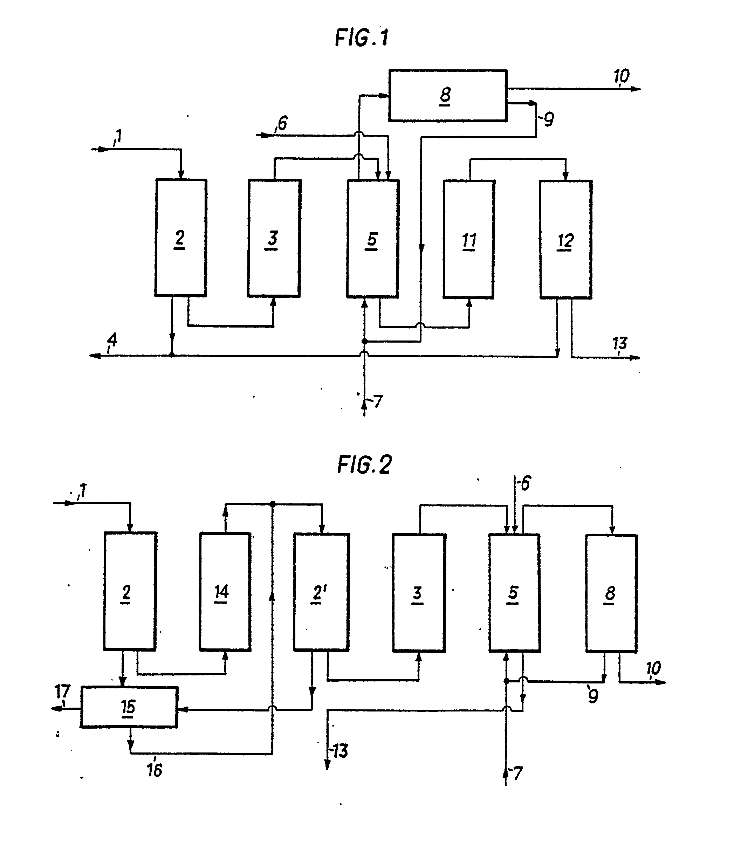

Nach Fig. 1 wird über die Leitung 1 beispielsweise Schlamm von der Naßentstaubung einer LD-Anlage einem Filteraggregat bzw. einer Zentrifugiereinrichtung 2 zugeführt. Der eisenoxidhältige feste Rückstand gelangt in einen Trockner 3 und das Abwasser wird einer Sammelleitung 4 zugeleitet. Der trockene Rückstand wird in den Chlorierungsreaktor 5 gebracht, in welchen durch die Leitung 6 auch trockene Einsatzstoffe, beispielsweise Hüttenstäube, ohne Vorbehandlung chargiert werden können. Das Reaktionsgas tritt durch die Leitung 7 in den Reaktor ein. Im Reaktor werden die in den Einsatzstoffen enthaltenen chlorierbaren Nichteisenmetallverbindungen, das sind insbesondere Verbindungen des Zinks und des Bleis, aber auch - sofern vorhanden - Ca-, Mg- und Alkalimetallverbindungen, in ihre Chloride übergeführt. Sublimierbare Chloride, vor allem $ZnCl_2$ und entsprechend der Prozeßführung auch Bleichlorid, eventuell NaCl und KCl sowie allenfalls minimale Mengen von $FeCl_3$ werden mit dem überschüssigen Reaktionsgas ausgetragen und gelangen in eine Sublimationsvorlage 8, in welcher sich die Gasphase abkühlt und die sublimierbaren Chloride in fester Form anfallen. In den meisten Fällen werden die Temperaturverluste aus der Anlagenkonzeption genügen, um Sublimation in der Vorlage 8 zu bewirken. Das überschüssige Reaktionsgas wird durch die Leitung 9 wieder in den Reaktor 5 rückgeführt. Unerwünschte gasförmige Reaktionsprodukte, wie Sauerstoff, können teilweise oder zur Gänze in einer nicht dargestellten Trennanlage entfernt werden. Durch die Leitung 7 werden die durch Chloridbildung auftretenden Chlorverluste in der Weise ergänzt, daß das Reaktionsgas oder Reaktionsgasgemisch in seiner Zusammensetzung weitgehend konstant gehalten wird. Verluste an gegebenenfalls im Reaktionsgas enthaltenen Inertgas treten in sehr geringfügigem Maß auf, so daß eine Ergänzung des kreislaufgeführten Inertgases nur in großen Zeitabständen notwendig ist. Die sublimierten Nichteisenmetallchloride fallen in sehr reinem Zustand an, sie werden durch den Austrag 10 abgezogen und können in weiteren Verfahrensschritten voneinander getrennt oder direkt weiterverwendet werden.

Die mit Chlor behandelten Einsatzstoffrückstände werden in einer Waschstufe 11 mit Wasser aufgeschlämmt, wodurch die nicht sublimierbaren Nichteisenmetallchloride in Lösung gehen. Die festen Schlammanteile werden in einer Separationsstufe 12 von der Lösung, welche der Sammelleitung 4 zugeführt wird, abgetrennt und die gereinigten eisenoxidhältigen Rückstände werden durch die Abführung 13 abgezogen und wieder zur Verhüttung eingesetzt.

Die feinteiligen Einsatzstoffe können auch gemäß Fig. 2 vor der Chlorierung aufbereitet werden.

Feinteilige Einsatzstoffe werden durch die Leitung 1 analog dem in Fig. 1 dargestellten Verfahrensschema zunächst einer Abtrenneinrichtung 2 zugeführt. Der abgetrennte feste Rückstand wird in einer Laugungsstufe 14 mit Säure behandelt, wobei insbesondere die Ca- und Mg-Anteile, welche größtenteils als Hydroxide oder Carbonate vorliegen, herausgelöst werden. In dieser Stufe werden starke wässerige Mineralsäuren eingesetzt, vorzugsweise Salz- oder Schwefelsäure. In einer weiteren Abtrenneinrichtung 2' werden die Feststoffe von der sauren Lösung separiert. Die saure Lösung wird in einer Neutralisationsstation 15 zweckmäßig mit der basischen Lösung aus der ersten Abtrenneinrichtung 2 versetzt und neutralisiert, wobei ein Schlamm ausfällt, welcher auch Anteile von Zn und Pb enthält. Dieser Schlamm wird über die Leitung 16 wieder in die Abtrenneinrichtung 2' rückgeführt oder gesondert weiter verarbeitet. Der wässerige Überstand wird aus der Station 15 durch den Auslaß 17 dem Abwassersystem zugeführt. Die Feststoffe aus der Einrichtung 2' werden in einer Trocknungsanlage 3 möglichst weitgehend getrocknet, was besonders wesentlich ist, um die Bildung von Salzsäuregas im Chlorierungsreaktor zu vermeiden. Der getrocknete Rückstand wird in den Chlorierungsreaktor 5 gebracht, welchem durch die Leitung 6 auch trockene, unbehandelte Einsatzstoffe, wie Hüttenstäube, zugesetzt werden können.

In weiterer Folge wird analog zu Fig. 1 das Reaktionsgas durch die Leitung 7 in den Reaktor eingeführt, das überschüssige Reaktionsgas strömt durch die Sublimationsvorlage 8 und wird durch die Leitung 9 in den Reaktor rückgeführt. Unerwünschte gasförmige Reaktionsprodukte können, wie bereits erläutert, aus dem kreislaufgeführten Reaktionsgas entfernt werden.

Die sublimierten Chloride werden durch den Austrag 10 abgezogen.

Bei der in Fig. 2 veranschaulichten Verfahrensvariante erübrigt sich eine weitere Waschstufe für die mit Chlor behandelten Einsatzstoffrückstände, die eisenoxidhältigen Rückstände können direkt durch die Abführung 13 aus dem Reaktor abgezogen und der Verhüttung zugeführt werden.

**Beispiel 1:**

LD-Schlamm, dessen Trockenbrückstand folgende Zusammensetzung aufwies:

| | | | |
|---|---|---|---|
| $SiO_2$ | 1,5 % | MnO | 1,5 % |
| $Fe_2O_3$ | 64,9 % | CaO | 16,1 % |
| FeO | 3,0 % | MgO | 3,0 % |
| $Al_2O_3$ | 0,3 % | $Na_2O$ | 0,3 % |
| ZnO | 4,9 % | $K_2O$ | 0,2 % |
| PbO | 1,0 % | $CO_2$ | 3,0 % |

wurde filtriert.

Der Filterkuchen wurde in Säure

aufgeschlämmt, wobei soviel Säure eingesetzt wurde, daß ein pH-Wert zwischen 3 und 4 erreicht wurde. Für diesen Zweck wurden entweder 661 g 36 %ige HCl/kg Filterrückstand oder 342 g 96 %ige $H_2SO_4$/kg Filterrückstand benötigt. Der nach Filtration der Aufschlämmung erhaltene feste Rückstand wies im trockenen Zustand folgende Zusammensetzung auf:

| | | | |
|---|---|---|---|
| $SiO_2$ | 2,0 % | MnO | 1,7 % |
| $Fe_2O_3$ | 84,5 % | CaO | 2,6 % |
| FeO | 1,0 % | MgO | 0,6 % |
| $Al_2O_3$ | 0,3 % | $Na_2O$ | 0,3 % |
| ZnO | 5,4 % | $K_2O$ | 0,2 % |
| pbO | 1,0 % | $CO_2$ | 0,2 % |
| | | $Cl^\ominus$ | 0,08 % |

Durch die Säurebehandlung werden durchschnittlich folgende Oxidmengen aus dem LD-Schlamm herausgelöst:

ZnO 10 bis 18 % (je nach ZnO-Gehalt)
$Fe_2O_3$ ca. 1 %
CaO 74 bis 80 %
MgO 82 bis 86 %

Der erhaltene Rückstand wurde getrocknet und in einen Chlorierungsreaktor gebracht. Der Chlorgasdurchsatz betrug 144 1 (bei Normalbedingungen)/kg Einsatzstoff.h. Bei 700° C wurden nach 50 min 103,3 g Sublimat/kg Einsatzstoff erhalten, bei 800° C nach der gleichen Reaktionszeit 136,7 g Sublimat/kg Einsatzstoff.

Zusammensetzung des Sublimates:

| Reaktionstemperatur | 700° C | 800° C |
|---|---|---|
| $ZnCl_2$ | 78,0 % | 58,9 % |
| $FeCl_3$ | 19,6 % | 29,9 % |
| $PbCl_2$ | 2,0 % | 8,1 % |
| NaCl | 0,1 % | 1,5 % |
| KCl | 0,1 % | 1,6 % |

Zusammensetzung der gereinigten eisenoxidhältigen Rückstände:

| Reaktionstemperatur | 700° C | 800° C |
|---|---|---|
| $SiO_2$ | 2,1 % | n.b. |
| $Fe_2O_3$ | 86,4 % | 87,6 % |
| FeO | 0,8 % | 1,2 % |
| $Al_2O_3$ | 0,3 % | n.b. |
| ZnO | 0,49 % | 0,38 % |
| PbO | 0,47 % | 0,04 % |
| MnO | 1,80 % | n.b. |
| CaO | 2,40 % | 2,10 % |
| MgO | 0,50 % | 0,40 % |
| $Na_2O$ | 0,40 % | n.b. |
| $K_2O$ | 0,20 | n.b |
| $Cl^{\ominus 1)}$ | 3,40 % | 3,4 % |

1) $Cl^\ominus$ liegt vorwiegend an Erdalkalien und Alkalien gebunden vor.

Der Entzinkungsgrad beträgt somit unter den angeführten Reaktionsbedingungen 91,0 % (700° C) bzw. 92,6 % (800° C).

**Beispiel 2:**

Der Feststoffanteil von LD-Schlamm wurde durch Zentrifugieren abgetrennt. Nach Trocknung wies der Rückstand folgende Zusammensetzung auf:

| | | |
|---|---|---|
| $SiO_2$ | 2,2 % | |
| $Fe_2O_3$ | 72,6 % | = 50,77 % Fe |
| $Al_2O_3$ | 0,7 % | = 0,37 % Al |
| PbO | 0,6 % | = 0,52 % Pb |
| ZnO | 1,9 % | = 1,52 % Zn |
| $TiO_2$ | 0,15 % | |
| CaO | 13,07 % | |
| MgO | 1,17 % | |
| $Na_2O$ | 0,5 % | |
| $K_2O$ | 0,4 % | |
| $CO_2$ | 4,4 % | |

Die Durchsatzmenge an Chlorgas bei der anschließenden Chlorierung des erhaltenen feinteiligen Einsatzstoffes betrug 156,7 l (bei Normalbedingungen) /kg Trockenrückstand.h. Die Temperatur während der Chlorierungsreaktion wurde zwischen 680° C und 710° C gehalten. Nach 50 min hatten sich in der Vorlage 53,3 g Sublimat/kg Einsatzstoff angesammelt, welches aus 54,10 % $ZnCl_2$; 42,75 % $FeCl_3$; 1,94 % $PbCl_2$; 0,52 % NaCl und 0,69 % KCl bestand.

Der Rückstand im Chlorierungsreaktor hatte folgende Zusammensetzung:

| | |
|---|---|
| $SiO_2$ | 2,4 % |
| $Fe_2O_3$ | 64,4 % |
| $Al_2O_3$ | 0,43 % |
| CaO | 13,30 % |
| MgO | 1,25 % |
| PbO | 0,14 % |
| ZnO | 0,17 % |
| $Cl^\ominus$ | 16,2 % |

Der wasserlösliche Anteil des Rückstandes betrug 24,8 %. Nach Aufschlämmen in Wasser und Wiederabtrennen der Feststoffe bestand der feste, trockene Rückstand aus

| | |
|---|---|
| $SiO_2$ | 3,2 % |
| $Fe_2O_3$ | 85,8 % |
| $Al_2O_3$ | 0,6 % |
| PbO | 0,18 % |
| ZnO | 0,21 % |
| $TiO_2$ | 0,20 % |
| CaO | 2,0 % |
| MgO | 1,4 % |
| $Na_2O$ | 0,4 % |
| $K_2O$ | 0,3 % |

In der wässerigen Phase waren folgende Verbindungen gelöst enthalten:

| | |
|---|---|
| $ZnCl_2$ | 0,01 % |
| $FeCl_3$ | 0,26 % |
| $CaCl_2$ | 23,30 % |
| $MgCl_2$ | 0,50 % |

Der erzielte Entzinkungsgrad von 89 % ist als sehr befriedigend anzusehen.

**Patentansprüche**

1. Verfahren zur Abtrennung von Nichteisenmetallen aus eisenoxidhältigen Rückständen durch Chlorierung der Rückstände mittels elementaren Chlors bei erhöhter Temperatur und Abkühlung der Reaktionsgase unter Sublimation der gebildeten sublimierbaren Chloride, gekennzeichnet durch die Kombination der folgenden Maßnahmen:

a) daß als Ausgangsmaterial Konverterstaub aus den Abgasen der Stahlerzeugung oder Hochofenfeingichtstaub eingesetzt wird;

b) daß als Reaktionsgas technisch reines Chlorgas in einem Überschuß von mindestens 2:1 gegenüber der stöchiometrisch zur Chlorierung der abzutrennenden Nichteisenmetalle notwendigen Menge, gegebenenfalls in Mischung mit Inertgas, verwendet wird und

c) daß die Reaktionstemperatur bei der Chlorierung zwischen 600 und 800° C gehalten wird,

wobei zur Abtrennung von Nichteisenmetallen, welche keine sublimierbaren Chloride bilden, wie Calcium und Magnesium,

entweder das Ausgangsmaterial durch Behandeln mit Säure aufbereitet wird, die erhaltene Lösung abgetrennt und der Rückstand getrocknet wird, bevor er der Chlorierung zugeführt wird,

oder die nach der Chlorierung und Abtrennung des Sublimates anfallenden Ausgangsmaterialrückstände in Wasser aufgeschlämmt werden und die Aufschlämmung filtriert wird.

2. Verfahren nach Anspruch 1, dadurch gekennzeichnet, daß das überschüssige Reaktionsgas im Kreislauf geführt wird, wobei jeweils unerwünschte gasförmige Reaktionsprodukte, wie Sauerstoff, teilweise oder zur Gänze aus dem Reaktionsgas entfernt werden.

3. Verfahren nach den Ansprüchen 1 und 2, dadurch gekennzeichnet, daß die Chlorierung der Ausgangsmaterialien in einem Fließbett bzw. in einer Wirbelschicht durchgeführt wird.

4. Verfahren nach den Ansprüchen 1 bis 3, dadurch gekennzeichnet, daß als Reaktionsgas im Ausgangszustand ein Gemisch von Chlorgas und Stickstoff verwendet wird.

5. Verfahren nach den Ansprüchen 1 bis 4, dadurch gekennzeichnet, daß die Chlorierung unter erhöhtem Druck durchgeführt wird.

**Claims**

1. A method for separating nonferrous metals from ironoxide-containing residues by chlorination of the residues by means of elementary chlorine at an elevated temperature and cooling of the reaction gases with the sublimation of the sublimable chlorides formed, characterised by the combination of the following measures:

a) that converter dust from flue gases of the steel production or fine flue dust from blast furnaces is used as starting material;

b) that technically pure chlorine gas in an excess of at least 2:1 relative to the stoichiometric amount necessary for the chlorination of the nonferrous metals to be separated, if desired mixed with inert gas, is used as reaction gas;

c) that the reaction temperature during chlorination is maintained at between 600 and 800°C,

wherein, for the separation of nonferrous metals that do not form sublimable chlorides, such as calcium and magnesium,

either the starting material is processed by treatment with acid, the solution obtained is separated and the residue is dried before being supplied to chlorination, or the starting material residues occuring after chlorination and separation of the sublimate are slurried in water and the slurry is filtered.

2. A method according to claim 1, characterised in that the excess reaction gas is guided in circulation, with undesired gaseous reaction products, such as oxygen, each being partially or completely eliminated from the reaction gas.

3. A method according to claims 1 and 2, characterised in that the chlorination of the starting materials is carried out in a fluidized bed.

4. A method according to claims 1 to 3, characterised in that a mixture of chlorine gas and nitrogen is used as reaction gas in the initial state.

5. A method according to claims 1 to 4, characterised in that the chlorination is carried out under elevated pressure.

**Revendications**

1. Procédé de séparation de métaux non-ferreux à partir de résidus contenant de l'oxyde de fer par chloruration du résidus au moyen de chlore se présentant sous forme atomique, à température élevée, puis refroidissement des gaz de la réaction avec sublimation des chlorures sublimables formés, caractérisé par la combinaison des mesures suivantes:

a) comme matériau de départ, on utilise du poussier de convertisseur provenant des gaz d'échappement de la production de l'acier ou du poussier fin de gueulard de haut fourneau;

b) comme gaz de réaction on utilise du chlore gazeux techniquement pur en surplus d'au moins 2:1 par rapport à la quantité stoéchiométrique nécessaire pour chlorurer les métaux non-ferreux à séparer, éventuellement en mélange avec un gaz inerte et

c) on maintient la température de réaction lors de la chloruration entre 600 et 800° C, étant précisé que, pour séparer les métaux non-ferreux qui ne donnent pas de chlorures sublimables, comme le calcium et le magnésium,

ou bien on prépare le matériau de départ par traitement à l'acide, on sépare la solution obtenue et on sèche le résidu avant de l'amener à la chloruration,

ou bien on met en suspension dans l'eau les résidus du matériau de départ qui se présentent après la chloruration et la séparation du sublimat et on filtre la suspension obtenue.

2. Procédé selon la revendication 1, caractérisé en ce que le gaz de réaction en excès est recyclé, étant précisé que l'on sépare respectivement, partiellement ou totalement, du gaz de réaction des produits de réaction gazeux indésirables comme l'oxygène.

3. Procédé selon les revendications 1 et 2, caractérisé en ce que l'on procède à la chloration du matériau de départ en lit fluidisé.

4. Procédé selon les revendications 1 à 3, caractérisé en ce que comme gaz de réaction à l'état de départ on emploie un mélange de chlore gazeux et d'azote.

5. Procédé selon les revendications 1 à 4, caractérisé en ce que l'on procède à la chloration sous pression élevée.

# FIG.1

# FIG.2